# EUROPÄISCHE PATENTSCHRIFT

(11) **EP 3 023 994 B1**
(45) Veröffentlichungstag und Bekanntmachung des Hinweises auf die Patenterteilung: **21.06.2017**
(21) Anmeldenummer: 14003916.5
(22) Anmeldetag: 21.11.2014
(51) Int. Cl.: G21F 9/28, G21C 17/003, G21C 17/013, G21C 19/32, G21F 9/34, G21C 17/01, G21C 19/07

(54) **Kernanlagenbeckenreinigungsvorrichtung**
Nuclear facility vessel cleaning device
Dispositif de nettoyage de cuve d'installation nucléaire

(43) Veröffentlichungstag der Anmeldung: 25.05.2016
(73) Patentinhaber: Westinghouse Electric Germany GmbH, 68167 Mannheim (DE)
(72) Erfinder: Strohmayer, Thomas, 68526 Ladenburg (DE); Demtröder, Dominik, 68259 Mannheim (DE); Weintrager, Udo, 68167 Mannheim (DE)
(74) Vertreter: Eickmeyer, Dietmar

(56) Entgegenhaltungen:
- EP-A1- 0 461 506
- WO-A1-2013/030005
- US-B1- 6 219 399

## Beschreibung

Die Erfindung betrifft eine Kernanlagenbeckenreinigungsvorrichtung. Es ist bekannt, dass in nuklearen Kernanlagen, wie beispielsweise einem Kernkraftwerk, abgebrannter nuklearer Brennstoff temporär zwischengelagert wird. Eine derartige Lagerung erfolgt typischerweise in einem Wasserbecken beziehungsweise einem Kernanlagenbecken, welches-je nach örtlichen Gegebenheiten - auch außerhalb eines Gebäudes im Freien liegen kann.

Aufgrund des im Freien unabdingbaren Eintrags von organischen Partikeln wie Blättern, Schmutz, Staub oder dergleichen sammelt sich im Laufe der Zeit ein schlammartiger Bodensatz in einem solchen Kernanlagenbecken an. Der Schlamm besteht zu einem Großteil aus organischem Material und zu einem kleinen Teil aus hochradioaktiven Brennstoffpartikeln. Der zwischengelagerte nukleare Brennstoff selbst befindet sich üblicherweise in kippmuldenartige Lagerbehältnisse aus Stahlblech, welche sich ihrerseits mit unbestimmter Position im Kernanlagenbecken befinden. Im Wasser befindliche Schwebstoffe schränken die Sicht im Wasserbecken ein, so dass eine optische Lokalisation der Lagerbehältnisse erschwert ist.

Um die Lagerbehältnisse mit dem nuklearen Brennstoff, üblicherweise hochradioaktive Brennelemente, zur Entsorgung aus dem Becken entfernen zu können, muss zuvor ein Großteil des Schlamms aus dem Kernanlagenbecken entfernt werden. Gemäß dem Stand der Technik werden die Schlämme durch Tauchpumpen, die an über das Kernanlagenbecken reichenden Kränen hängen, abgepumpt, wobei derartige Kräne nur temporär zum Zwecke des Abpumpens des Schlamms aufgestellt werden. Nachteilig ist hier die große Weite des Kernanlagenbeckens, beispielsweise 20m - 30m, was einen Straßenkran mit entsprechend großer Stützweite oder einen auf Schienen fahrenden Portalkran erforderlich macht. Zudem ist die Erreichbarkeit des Beckenrandes je nach örtlichen Gegebenheiten stark eingeschränkt, beispielsweise durch angrenzende Gebäude oder auch durch einen bereits vorhandenen Portalkran.

Ausgehend von diesem Stand der Technik ist es Aufgabe der Erfindung, eine Kernanlagenbeckenreinigungsvorrichtung bereitzustellen, welche besonders flexibel einzusetzen ist und welche auch bei beengten räumlichen Verhältnissen um das zu reinigende Kernanlagenbecken einzusetzen ist.

Die Aufgabe wird gelöst durch eine erfindungsgemäße Kernanlagenbeckenreinigungsvorrichtung. Diese ist gekennzeichnet durch
- eine in Wasser schwimmfähige Schwimmplattform mit Auftriebskörpern,
- eine Antriebsvorrichtung zum Verfahren der Schwimmplattform auf der Oberfläche eines mit Wasser gefüllten zu reinigenden Kernanlagenbeckens,
- eine mit der Schwimmplattform verbundene Abseilvorrichtung,
- eine vertikal durch die Abseilvorrichtung ab- und aufseilbare Pumpe mit einem mit dieser an seinem ersten Ende verbundenen Absaugschlauch zum Reinigen des Bodens des Kernanlagenbeckens,
- eine Fernsteuervorrichtung zum Fernbedienen wenigstens der Antriebsvorrichtung und der Abseilvorrichtung,
- einen optionalen stationären externen Lagertank,
- wobei der Absaugschlauch vorzugsweise zumindest indirekt mit seinem zweiten Ende in den stationären externen Lagertank mündet.

Die Grundidee der Erfindung besteht darin, anstelle eines stationären Kranes eine ferngesteuerte, schwimmfähige Schwimmplattform zu verwenden, welche eine auf Höhe des Beckenbodens absenkbare Saugpumpe für den zu entfernenden Schlamm aufweist. Durch die Verwendung von Auftriebskörpern, welche beispielsweise in mehreren voneinander beabstandeten Gruppen angeordnet sind, ist in vorteilhafter Weise eine hohe Kippstabilität gewährleistet, so dass Kraftbelastungen, welche zum Beispiel durch das Hinterherziehen des Saugschlauches auftreten können, die stabile Schwimmlage der Schwimmplattform nicht gefährden. Zur weiteren Vermeidung von dreh- oder kippmomentähnlichen Belastungen ist die Abseilvorrichtung vorzugsweise mittig auf der Schwimmplattform über einem Durchbruch angeordnet, so dass auch die durch den Durchbruch nach unten abseilbare Pumpe mit dem Saugschlauch die stabile Schwimmlage der Schwimmplattform nicht durch ein Kippmoment gefährdet.

Die Fernsteuervorrichtung für die Antriebe sowie die Abseilvorrichtung ermöglichen ein für das Bedienpersonal gefahrloses Manövrieren der Schwimmplattform im Kernanlagenbecken. Aufgrund der geringen Abmessungen der Schwimmplattform, beispielsweise mit einer Grundfläche von 1,5m x 2m, sind auch schwer zugängliche Bereiche des Kernanlagenbeckens einfach erreichbar und zu reinigen. Hierfür wird die Pumpe auf die Höhe des Beckenbodens abgesenkt und aktiviert, so dass der Beckenboden abgesaugt wird. Bei einer entsprechenden Verfahrbewegung der Schwimmplattform wird der Beckenboden komplett gereinigt und die Lagerbehältnisse freigelegt, so dass sie nachfolgend aus dem Kernanlagenbecken entfernt und einer Entsorgung zugeführt werden können. Das abgesaugte schlammhaltige Wasser wird hierbei beispielsweise in einen stationären externen Lagertank am Beckenrand gepumpt. Dort wird optional der Schlamm ausgesiebt und das gereinigte Wasser wieder in das Kernanlagenbecken zurückgeführt.

Aufgrund der schwierigen radiologischen Bedingungen im und am Kernanlagenbecken sollte die Schwimmplattform möglichst nicht aus dem Wasser gehoben werden sondern vielmehr permanent darin verweilen. Daher sind optional potentiell zu tauschende Bauteile mit fernhantiert lösbaren Verschlüssen zu sichern.

Gemäß einer besonders bevorzugten Ausgestaltungsform der erfindungsgemäßen Schwimmplattform ist am zweiten Ende des Absaugschlauchs eine Verbindungsbaugruppe vorgesehen, welche dieses mit dem ersten Ende eines Abführschlauchs verbindet. Durch eine derartige Verbindungsbaugruppe und die Aufteilung des Schlauches in einen Absaug- und einen Abführschlauch ist in vorteilhafter Weise der Aufbau beziehungsweise die Montage des erfindungsgemäßen Systems vereinfacht. Die Verbindungsbaugruppe kann optional auch eine Aufwickelvorrichtung für einen der beiden Schläuche umfassen so dass längere Schlauchschlaufen vermieden sind. Dadurch ein einfacheres Manövrieren der Schwimmplattform ermöglicht.

Gemäß einer weiteren Ausgestaltungsform der erfindungsgemäßen Kernanlagenbeckenreinigungsvorrichtung ist die Verbindungsbaugruppe mit der Schwimmplattform verbunden. Somit lassen sich auch Funktionalitäten, welche eine zusätzliche Baugruppe erfordern, beispielsweise ein Vorfilter für das abgesaugte Wasser, einfach an Bord der Schwimmplattform installieren.

Einer weiteren Variante der erfindungsgemäßen Kernanlagenbeckenreinigungsvorrichtung folgend entspricht die Länge des Absaugschlauches mindestens der Tiefe des zu reinigenden Kernanlagenbeckens. Hierdurch ist sichergestellt, dass die Pumpe bis auf den Beckenboden abgeseilt werden kann.

Gemäß einer weiteren Ausgestaltungsvariante der erfindungsgemäßen Kernanlagenbeckenreinigungsvorrichtung ist die Pumpe mittels der Abseilvorrichtung von einer oberen Position innerhalb der Schwimmplattform zu einer unteren Position unterhalb der Wasseroberfläche, insbesondere auf den Boden des zu reinigenden Kemanlagenbeckens, ab- und aufseilbar. In der oberen Position ist die Pumpe ebenso wie der Absaugschlauch oberhalb der Wasseroberfläche befindlich, beispielsweise in einem Abstand von 500mm. Hierdurch wird eine Dauerbelastung der Pumpe durch das Wasser vermieden insbesondere auch für den Zeitraum, in welchem die Schwimmplattform ungenutzt im Kernanlagenbecken verweilt.

Gemäß einer besonders bevorzugten Ausgestaltungsvariante der Kemanlagenbeckenreinigungsvorrichtung umfasst die Antriebsvorrichtung wenigstens drei Antriebe, nämlich
- einen Antrieb zum axialen Vorschub und
- zwei Antriebe zum lateralen Verfahren und Drehen der Schwimmplattform.

Ein Antrieb kann beispielsweise ein Vorschubspropeller sein. Mit diesen drei Antrieben ist eine volle Manövrierfähigkeit der Schwimmplattform auf der Wasseroberfläche des Kernanlagenbeckens gewährleistet. Auch ein drehbarer Vorschubpropeller ist ein geeigneter Antrieb. Idealerweise werden Elektromotoren verwendet.

Gemäß einer weiteren Ausgestaltungsform der Kernanlagenbeckenreinigungsvorrichtung ist auf der Schwimmplattform wenigstens eine Übersichtskamera vorgesehen, idealerweise wenigstens zwei, nämlich eine in axialer Vorschubsrichtung am Bug und eine in entgegengesetzter Richtung am Heck der Schwimmplattform.

Gemäß einer weiterhin bevorzugten Ausgestaltungsform der Kernanlagenbeckenreinigungsvorrichtung sind die Bilddaten der wenigstens einen Übersichtskamera zu einer Anzeigevorrichtung der Fernsteuervorrichtung übertragbar und dort anzeigbar. Anhand der durch die Kameras gewonnen Bildinformationen, welche der Bedienperson der Schwimmplattform an der Fernsteuervorrichtung zur Verfügung gestellt werden, gestaltet sich eine Fernsteuerung der Schwimmplattform deutlich einfacher. Somit kann während des Absenkens, Hebens und Pumpens die Umgebung der Plattform beobachtet werden. Bilddaten können entweder direkt an der Fernsteuervorrichtung angezeigt werden oder aber auch an einem Bildschirm in Sichtnähe.

Einer weiteren Ausgestaltungsform der erfindungsgemäßen Kernanlagenbeckenreinigungsvorrichtung folgend sind an der Schwimmplattform Leuchtmittel zur Ausleuchtung des Aufnahmebereichs der wenigstens einen Übersichtskamera vorgesehen. LED sind beispielsweise geeignete Leuchtmittel.

Gemäß einer weiteren Ausgestaltungsform der Kernanlagenbeckenreinigungsvorrichtung ist die Schwimmplattform mittels eines in Wasser schwimmfähigen flexiblen Kabelstrangs mit einer externen stationären Übergabeschnittstelle verbunden. Durch die Schwimmfähigkeit des Kabelstrangs ist in vorteilhafter Weise ein Dreh- oder Kippmoment vermeiden, welches die stabile Schwimmlage der Schwimmplattform gefährden könnte. Eine Schwimmfähigkeit kann beispielsweise durch ein Vorsehen von Schwimmkörpern erreicht werden, welche mit dem Kabelstrang verbunden sind. Die Übergabeschnittstelle ist typischerweise durch eine Steckverbindung am Beckenrand gebildet.

Entsprechend einer weiteren Ausgestaltungsform der Kernanlagenbeckenreinigungsvorrichtung umfasst der schwimmfähige Kabelstrang elektrische Versorgungsleitungen zur Versorgung der Schwimmplattform mit elektrischer Energie beziehungsweise auch Datenleitungen insbesondere zum Datenaustausch mit der Fernsteuervorrichtung. Somit sind alle benötigten Versorgungs- und Kommunikationsleitungen zum reibungslosen Betrieb der Schwimmplattform vorhanden. Ein Schaltschrank auf der Plattform dient zur Ansteuerung des Seilzugs, der Antriebe und der Pumpe.

Gemäß einer besonders bevorzugten Ausgestaltungsform der Kernanlagenbeckenreinigungsvorrichtung weist die Schwimmplattform einen Metallrahmen mit beiderseits seiner axialen Mittelachse angeordneten voneinander beabstandeten Auftriebskörpern auf, wobei die Abseilvorrichtung zumindest teilweise in dem zwischen den Auftriebskörpern gebildeten Zwischenraum angeordnet ist. Durch die Verwendung eines Metallrahmens wird die Konstruktion sehr vereinfacht. Es kann beispielsweise eine Vielzahl an kleineren gleichartigen Auftriebskörpern durch den Metallrahmen zu einem großen Auftriebskörper verbunden werden. Durch die beabstandete Anordnung wird die effektive Grundfläche der Schwimmplattform vergrößert und die Schwimmlage dadurch stabilisiert. Der zwischen den Auftriebskörpern gebildete mittige Zwischenraum eignet sich in guter Weise, hierdurch mittig die Abseilvorrichtung zu führen, wodurch die Schwimmstabilität weiter verbessert wird.

Gemäß einer weiteren Ausgestaltungsform der Kernanlagenbeckenreinigungsvorrichtung weist die Schwimmplattform horizontal zumindest teilweise umlaufende Stoßfänger auf. Bei eventuellen Kollisionen mit beispielsweise dem Beckenrand werden hierdurch Stöße in vorteilhafter Weise abgefedert und eine Beschädigung der Schwimmplattform vermieden.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: eine erste exemplarische Schwimmplattform,
- Fig. 2: eine zweite exemplarische Schwimmplattform sowie,
- Fig. 3: ein Kernanlagenbecken mit Kernanlagenbeckenreinigungsvorrichtung.

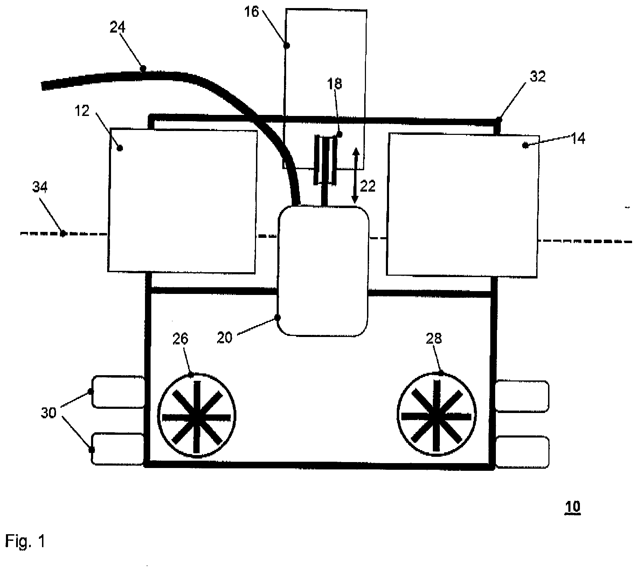

Fig. 1 zeigt eine erste exemplarische Schwimmplattform 10 in einer Seitenansicht. An einem Metallrahmen 32 sind beiderseits seiner axialen Mitte quaderförmige Auftriebskörper 12, 14 angeordnet, welche die im Wasser schwimmende Schwimmplattform 10 zumindest teilweise oberhalb der Wasseroberfläche 34 halten. Zwischen den in einem Abstand zueinander angeordneten Auftriebskörpern 12, 14 ist eine Abseilvorrichtung 16, in diesem Fall umfassend eine Winde mit Antrieb, vorgesehen, welche mittels eines über eine Abseilrolle 18 geführtes Seil eine am Seilende befestigte Pumpe 20 in Richtung des Pfeils 22 auf- und abseilen kann. Die Pumpe 20 ist über einen Absaugschlauch 24 mit einem nicht dargestellten Lagertank verbunden, in welchen das abgepumpte Wasser geführt wird.

Die Schwimmplattform 10 ist mittels einer mehrere Antriebe 26, 28 umfassenden Antriebsvorrichtung voll manövrierfähig, wobei die Antriebe 26, 28 ebenso wie die Abseilvorrichtung 16 über eine nicht dargestellte Fernsteuervorrichtung fernbedienbar sind. Um die Schwimmplattform 10 sind teilweise umlaufende Stoßfänger 30 angeordnet, welche beispielsweise durch Kollisionen mit dem Beckenrand verursachte Stöße entsprechend abfedern, so dass eine Beschädigung der Schwimmplattform 10 dadurch in vorteilhafter Weise vermieden ist.

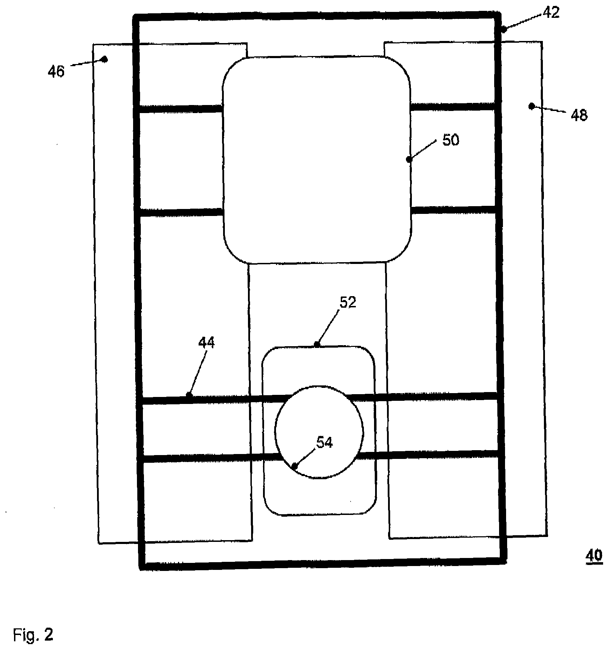

Fig. 2 zeigt eine zweite exemplarische Schwimmplattform 40 in einer Draufsicht. An einem Metallrahmen 42 sind in einem horizontalen Abstand zueinander zwei Auftriebskörper 46, 48 angeordnet, welche die Schwimmplattform 10 oberhalb der Wasseroberfläche halten. Oberhalb von Querstangen 44 des Metallrahmens 42 ist ein Schaltkasten 50 angeordnet, welcher die Spannungsversorgung durch einen nicht gezeigten Kabelstrang an die verschiedenen elektrischen Komponenten der Schwimmplattform 40, wie beispielsweise einer Abseilvorrichtung 54, wahlweise zur Verfügung stellt. Die Abseilvorrichtung 54 ist eine Seilwinde, mittels welcher eine Pumpe 52 ab- und aufgeseilt werden kann.

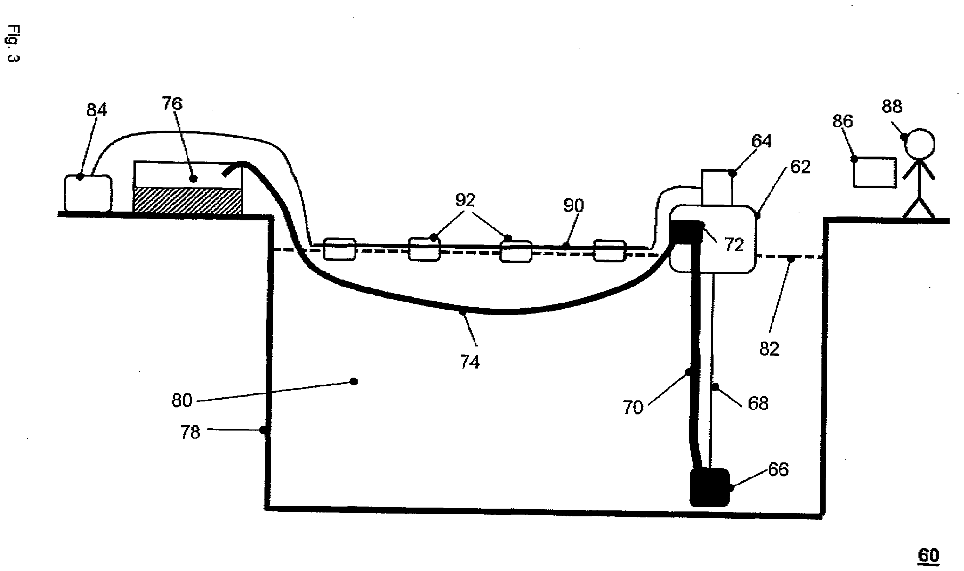

Fig. 3 zeigt ein Kernanlagenbecken mit Kernanlagenbeckenreinigungsvorrichtung in einer Darstellung 60. Eine Schwimmplattform 62 schwimmt auf der Wasseroberfläche 82 eines mit Wasser 80 gefüllten Kernanlagenbeckens 78. Mittels einer Abseilvorrichtung der Schwimmplattform 62 Ist über ein Seil 68 eine Pumpe 66 auf den Grund des Kernanlagenbeckens 78 abseilbar. Die Pumpe 66 ist dafür vorgesehen, während ihres Betriebes Wasser vom Beckengrund in einen Absaugschlauch 70 zu pumpen, welcher in eine Verbindungsbaugruppe 72 auf der Schwimmplattform 62 mündet. Von der Verbindungsbaugruppe 72 abgehend Ist ein Abführschlauch 74 vorgesehen, welcher in diesem Beispiel in einem stationären externen Lagertank 76 am Beckenrand mündet, in welchen das abgepumpte Wasser eingeführt wird.

Die Schwimmplattform 62 verfügt zudem über einen oben montierten Schaltkasten 64, von welchem die Antriebe und die Abseilvorrichtung der Schwimmplattform 62 versorgt werden. Der Schaltkasten 64 seinerseits wird über einen schwimmfähigen Kabelstrang 90 mit elektrischer Energie versorgt, wobei der Kabelstrang 90 auch eine Datenleitung für die Fernbedienung der Schwimmplattform 62 aufweist. Die Schwimmfähigkeit des Kabelstrangs 90 wird durch Schwimmkörper 92 erreicht. Der Kabelstrang 90 ist am Beckenrand mit einer externen stationären Übergabestelle 84 verbunden, an welcher sowie eine elektrische Energieversorgung als auch eine Datenschnittstelle bereitgestellt sind.

### Bezugszeichenliste

- 10: erste exemplarische Schwimmplattform
- 12: erster Auftriebskörper von Schwimmplattform
- 14: zweiter Auftriebskörper von Schwimmplattform
- 16: Abseilvorrichtung
- 18: Abseilrolle
- 20: Pumpe
- 22: Auf- und Abseilrichtung von Pumpe
- 24: Absaugschlauch
- 26: erster Antrieb von Antriebsvorrichtung
- 28: zweiter Antrieb von Antriebsvorrichtung
- 30: Stoßfänger
- 32: Metallrahmen
- 34: Wasseroberfläche
- 40: zweite exemplarische Schwimmplattform
- 42: Metallrahmen
- 44: Querstange von Metallrahmen
- 46: erster Auftriebskörper von Schwimmplattform
- 48: zweiter Auftriebskörper von Schwimmplattform
- 50: Schaltkasten
- 52: Pumpe
- 54: Abseilvorrichtung
- 60: Kernanlagenbecken mit Kernanlagenbeckenreinigungsvorrichtung
- 62: Schwlmmplattform
- 64: Schaltkasten
- 66: Pumpe
- 68: Seil
- 70: Absaugschlauch
- 72: Verbindungsbaugruppe
- 74: Abführschlauch
- 76: stationärer externer Lagertank
- 78: Kernanlagenbecken
- 80: Wasserinhalt von Kernanlagenbecken
- 82: Wasseroberfläche
- 84: externe stationäre Übergabeschnittstelle
- 86: Fernsteuervorrichtung
- 88: Bedienperson
- 90: schwimmfähiger Kabelstrang
- 92: Schwimmkörper von Kabelstrang

## Patentansprüche

1. Kernanlagenbeckenreinigungsvorrichtung, umfassend
• eine in Wasser (80) schwimmfähige Schwimmplattform (10, 40, 62) mit Auftriebskörpern (12, 14, 46, 48),
• eine Antriebsvorrichtung (26, 28) zum Verfahren der Schwimmplattform (10, 40, 62) auf der Oberfläche eines mit Wasser gefüllten zu reinigenden Kernanlagenbeckens (78),
• eine mit der Schwimmplattform (10, 40, 62) verbundene Abseilvorrichtung (16, 54),
• eine vertikal durch die Abseilvorrichtung (16, 54) ab- und aufseilbare (22) Pumpe (20, 52, 66) mit einem mit dieser an seinem ersten Ende verbundenen Absaugschlauch (24, 70) zum Reinigen des Bodens des Kernanlagenbeckens (78),
• eine Fernsteuervorrichtung (86) zum Fernbedienen wenigstens der Antriebsvorrichtung (26, 28) und der Abseilvorrichtung (16, 54).

2. Kernanlagenbeckenreinigungsvorrichtung nach Anspruch 1, **dadurch gekennzeichnet, dass** diese weiterhin umfasst:
• einen stationären externen Lagertank (76),
• wobei der Absaugschlauch (24, 70) zumindest indirekt mit seinem zweiten Ende in den stationären externen Lagertank (76) mündet.

3. Kernanlagenbeckenreinigungsvorrichtung nach Anspruch 1 oder 2, **dadurch gekennzeichnet, dass** am zweiten Ende des Absaugschlauchs (24, 70) eine Verbindungsbaugruppe (72) vorgesehen ist, welche dieses mit dem ersten Ende eines Abführschlauchs (74) verbindet, der mit seinem zweiten Ende in den stationären externen Lagertank (76) mündet.

4. Kernanlagenbeckenreinigungsvorrichtung nach Anspruch 3, **dadurch gekennzeichnet, dass** die Verbindungsbaugruppe (72) mit der Schwimmplattform (10, 40, 62) verbunden ist.

5. Kernanlagenbeckenreinigungsvorrichtung nach Anspruch 4, **dadurch gekennzeichnet, dass** die Länge des Absaugschlauches (24, 70) mindestens der Tiefe des zu reinigenden Kernanlagenbeckens (78) entspricht.

6. Kernanlagenbeckenreinigungsvorrichtung nach einem der vorherigen Ansprüche, **dadurch gekennzeichnet, dass** die Pumpe (20, 52, 66) mittels der Abseilvorrichtung (16, 54) von einer oberen Position innerhalb der Schwimmplattform (10, 40, 62) zu einer unteren Position unterhalb der Wasseroberfläche (34, 82), insbesondere auf den Boden des zu reinigenden Kernanlagenbeckens, (78) ab- und aufseilbar (22) ist.

7. Kernanlagenbeckenreinigungsvorrichtung nach einem der vorherigen Ansprüche, **dadurch gekennzeichnet, dass** die Antriebsvorrichtung (26, 28) wenigstens drei Antriebe umfasst, nämlich
• einen zum axialen Vorschub und
• zwei zum lateralen Verfahren und Drehen der Schwimmplattform. (10, 40, 62).

8. Kernanlagenbeckenreinigungsvorrichtung nach einem der vorherigen Ansprüche, **dadurch gekennzeichnet, dass** auf der Schwimmplattform (10, 40, 62) wenigstens eine Übersichtskamera vorgesehen ist.

9. Kernanlagenbeckenreinigungsvorrichtung nach Anspruch 8, **dadurch gekennzeichnet, dass** Bilddaten der wenigstens einen Übersichtskamera zur einer Anzeigevorrichtung der Fernsteuervorrichtung (86) übertragbar und dort anzeigbar sind.

10. Kernanlagenbeckenreinigungsvorrichtung nach Anspruch 8 oder 9, **dadurch gekennzeichnet, dass** an der Schwimmplattform (10, 40, 62) Leuchtmittel zur Ausleuchtung des Aufnahmebereichs der wenigstens einen Übersichtskamera vorgesehen sind.

11. Kernanlagenbeckenreinigungsvorrichtung nach einem der vorherigen Ansprüche, **dadurch gekennzeichnet, dass** die Schwimmplattform (10, 40, 62) mittels eines in Wasser (80) schwimmfähigen flexiblen Kabelstrangs (90) mit einer externen stationären Übergabeschnittstelle (84) verbunden ist.

12. Kernanlagenbeckenreinigungsvorrichtung nach Anspruch 11, **dadurch gekennzeichnet, dass** der schwimmfähige Kabelstrang (90) elektrische Versorgungsleitungen zur Versorgung der Schwimmplattform (10, 40, 62) mit elektrischer Energie umfasst.

13. Kernanlagenbeckenreinigungsvorrichtung nach Anspruch 11 oder 12, **dadurch gekennzeichnet, dass** der schwimmfähige Kabelstrang (90) Datenleitungen insbesondere zum Datenaustausch mit der Fernsteuervorrichtung (86) umfasst.

14. Kernanlagenbeckenreinigungsvorrichtung nach einem der vorherigen Ansprüche, **dadurch gekennzeichnet, dass** die Schwimmplattform (10, 40, 62) einen Metallrahmen (32, 42) mit beiderseits seiner axialen Mittelachse angeordneten voneinander beabstandeten Auftriebskörpern (12, 14, 46, 48) aufweist, wobei die Abseilvorrichtung (16, 54) zumindest teilweise in dem zwischen den Auftriebskörpern (12, 14, 46, 48) gebildeten Zwischenraum angeordnet ist.

15. Kernanlagenbeckenreinigungsvorrichtung nach einem der vorherigen Ansprüche, **dadurch gekennzeichnet, dass** die Schwimmplattform (10, 40, 62) horizontal zumindest teilweise umlaufende Stoßfänger (30) aufweist.

## Claims

1. Nuclear facility pool cleaning device comprising
• a floating platform (10, 40, 62), capable of floating in water (80), having buoyancy bodies (12, 14, 46, 48),
• a drive device (26, 28) for displacing the floating platform (10, 40, 62) on the surface of a water-filled nuclear facility pool (78) to be cleaned,
• a winching device (16, 54) connected to the floating platform (10, 40, 62),
• a pump (20, 52, 66) which is winchable (22) vertically by the winching device (16, 54) and has a vacuum hose (24, 70), connected thereto at its first end, for cleaning the bottom of the nuclear facility pool (78),
• a remote control device (86) for remotely operating at least the drive device (26, 28) and the winching device (16, 54).

2. Nuclear facility pool cleaning device according to Claim 1, **characterized in that** said device also comprises:
• a stationary external storage tank (76),
• wherein the second end of the vacuum hose (24, 70) leads at least indirectly into the stationary external storage tank (76).

3. Nuclear facility pool cleaning device according to Claim 1 or 2, **characterized in that** a connecting assembly (72) is provided at the second end of the vacuum hose (24, 70), said connecting assembly (72) connecting said second end to the first end of a discharge hose (74), the second end of which leads into the stationary external storage tank (76).

4. Nuclear facility pool cleaning device according to Claim 3, **characterized in that** the connecting assembly (72) is connected to the floating platform (10, 40, 62).

5. Nuclear facility pool cleaning device according to Claim 4, **characterized in that** the length of the vacuum hose (24, 70) corresponds at least to the depth of the nuclear facility pool (78) to be cleaned.

6. Nuclear facility pool cleaning device according to one of the preceding claims, **characterized in that** the pump (20, 52, 66) is winchable up and down (22) by means of the winching device (16, 54) from an upper position within the floating platform (10, 40, 62) to a lower position beneath the water surface (34, 82), in particular onto the bottom of the nuclear facility pool (78) to be cleaned.

7. Nuclear facility pool cleaning device according to one of the preceding claims, **characterized in that** the drive device (26, 28) comprises at least three drives, specifically
• one for axial forward motion, and
• two for laterally displacing and rotating the floating platform (10, 40, 62).

8. Nuclear facility pool cleaning device according to one of the preceding claims, **characterized in that** at least one overview camera is provided on the floating platform (10, 40, 62).

9. Nuclear facility pool cleaning device according to Claim 8, **characterized in that** image data from the at least one overview camera are transferable to a display device of the remote control device (86) and are able to be displayed there.

10. Nuclear facility pool cleaning device according to Claim 8 or 9, **characterized in that** light sources for illuminating the recording region of the at least one overview camera are provided on the floating platform (10, 40, 62).

11. Nuclear facility pool cleaning device according to one of the preceding claims, **characterized in that** the floating platform (10, 40, 62) is connected to an external stationary transfer interface (84) by means of a flexible cable harness (90) that is capable of floating in water (80).

12. Nuclear facility pool cleaning device according to Claim 11, **characterized in that** the cable harness (90) that is capable of floating comprises electric power lines for supplying the floating platform (10, 40, 62) with electric power.

13. Nuclear facility pool cleaning device according to Claim 11 or 12, **characterized in that** the cable harness (90) that is capable of floating comprises data lines in particular for data exchange with the remote control device (86).

14. Nuclear facility pool cleaning device according to one of the preceding claims, **characterized in that** the floating platform (10, 40, 62) has a metal frame (32, 42) with buoyancy bodies (12; 14, 46, 48) arranged in a manner spaced apart from one another on both sides of its axial centreline, wherein the winching device (16, 54) is arranged at least partially in the intermediate space formed between the buoyancy bodies (12, 14, 46, 48).

15. Nuclear facility pool cleaning device according to one of the preceding claims, **characterized in that** the floating platform (10, 40, 62) has horizontally at least partially encircling fenders (30).

## Revendications

1. Dispositif de nettoyage de bassin de centrale nucléaire comprenant :
• une plateforme flottante (10, 40, 62) capable de flotter dans l'eau (80) et dotée de corps de flottaison (12, 14, 46, 48) ;
• un dispositif d'entraînement (26, 28) destiné au déplacement de la plateforme flottante (10, 40, 62) à la surface d'un bassin de centrale nucléaire (78) devant être nettoyé, lequel est rempli d'eau ;
• un dispositif de descente à câble (16, 54) relié à la plateforme flottante (10, 40, 62) ;
• une pompe (20, 52, 66) pouvant être descendue et remontée à la verticale au moyen d'un câble (22) par l'intermédiaire du dispositif de descente à câble (16, 54), laquelle pompe (20, 52, 66) est dotée d'un tuyau d'aspiration (24, 70) qui est relié avec celle-ci par sa première extrémité et qui est destiné au nettoyage du fond du bassin de la centrale nucléaire (78) ;
• un dispositif de télécommande (86) destiné à la commande à distance, tout au moins, du dispositif d'entraînement (26, 28) et du dispositif de descente à câble (16, 54).

2. Dispositif de nettoyage de bassin de centrale nucléaire selon la revendication 1, **caractérisé en ce que** ledit dispositif comprend en outre :
• une cuve de stockage (76) stationnaire, externe ;
• selon lequel le tuyau d'aspiration (24, 70) débouche, tout au moins indirectement, dans la cuve de stockage (76) stationnaire, externe par sa deuxième extrémité.

3. Dispositif de nettoyage de bassin de centrale nucléaire selon la revendication 1 ou 2, **caractérisé en ce qu'**un ensemble de raccordement (72) est prévu au niveau de la deuxième extrémité du tuyau d'aspiration (24, 70), lequel relie cette deuxième extrémité à la première extrémité d'un tuyau d'évacuation (74) qui débouche dans la cuve de stockage (76) stationnaire, externe par sa deuxième extrémité.

4. Dispositif de nettoyage de bassin de centrale nucléaire selon la revendication 3, **caractérisé en ce que** l'ensemble de raccordement (72) est relié à la plateforme flottante (10, 40, 62).

5. Dispositif de nettoyage de bassin de centrale nucléaire selon la revendication 4, **caractérisé en ce que** la longueur du tuyau d'aspiration (24, 70) correspond au moins à la profondeur du bassin de centrale nucléaire (78) devant être nettoyé.

6. Dispositif de nettoyage de bassin de centrale nucléaire selon l'une des revendications précédentes, **caractérisé en ce que** la pompe (20, 52, 66) peut être descendue et remontée au moyen d'un câble (22), au moyen du dispositif de descente à câble (16, 54), depuis une position supérieure, située à l'intérieur de la plateforme flottante (10, 40, 62), jusqu'à une position inférieure qui se trouve au-dessous de la surface de l'eau (34, 82), en particulier au fond du bassin de centrale nucléaire (78) devant être nettoyé.

7. Dispositif de nettoyage de bassin de centrale nucléaire selon l'une des revendications précédentes, **caractérisé en ce que** le dispositif d'entraînement (26, 28) comprend au moins trois entraînements, à savoir :
• un entraînement destiné à l'avance axiale ; et
• deux entraînements destinés au déplacement latéral et à la rotation de la plateforme flottante (10, 40, 62).

8. Dispositif de nettoyage de bassin de centrale nucléaire selon l'une des revendications précédentes, **caractérisé en ce qu'**au moins une caméra de surveillance est prévue sur la plateforme flottante (10, 40, 62).

9. Dispositif de nettoyage de bassin de centrale nucléaire selon la revendication 8, **caractérisé en ce que** des données d'image de l'au moins une caméra de surveillance peuvent être transmises à un dispositif d'affichage du dispositif de télécommande (86) en vue de pouvoir y être affichées.

10. Dispositif de nettoyage de bassin de centrale nucléaire selon la revendication 8 ou 9, **caractérisé en ce que** des moyens d'éclairage sont prévus au niveau de la plateforme flottante (10, 40, 62) en vue de l'éclairage de la zone de balayage de l'au moins une caméra de surveillance.

11. Dispositif de nettoyage de bassin de centrale nucléaire selon l'une des revendications précédentes, **caractérisé en ce que** la plateforme flottante (10, 40, 62) est reliée à une interface de transfert (84) stationnaire, externe au moyen d'un faisceau de câbles (90) flexible et capable de flotter dans l'eau (80).

12. Dispositif de nettoyage de bassin de centrale nucléaire selon la revendication 11, **caractérisé en ce que** le faisceau de câbles (90) capable de flotter comprend des lignes d'alimentation électriques qui sont destinées à l'alimentation de la plateforme flottante (10, 40, 62) en énergie électrique.

13. Dispositif de nettoyage de bassin de centrale nucléaire selon la revendication 11 ou 12, **caractérisé en ce que** le faisceau de câbles (90) capable de flotter comprend des câbles de données qui sont destinés, en particulier, à l'échange de données avec le dispositif de télécommande (86).

14. Dispositif de nettoyage de bassin de centrale nucléaire selon l'une des revendications précédentes, **caractérisé en ce que** la plateforme flottante (10, 40, 62) présente un châssis en métal (32, 42) avec des corps de flottaison (12, 14, 46, 48) espacés les uns des autres et disposés des deux côtés de l'axe central axial dudit châssis en métal (32, 42), selon lequel le dispositif de descente à câble (16, 54) est disposé, tout au moins en partie, dans le compartiment intermédiaire qui est formé entre les corps de flottaison (12, 14, 46, 48).

15. Dispositif de nettoyage de bassin de centrale nucléaire selon l'une des revendications précédentes, **caractérisé en ce que** la plateforme flottante (10, 40, 62) présente des absorbeurs de choc (30), lesquels sont disposés à l'horizontale et sont installés, tout au moins en partie, sur tout le pourtour de ladite plateforme flottante (10, 40, 62).
